# EUROPÄISCHE PATENTSCHRIFT

(11) **EP 0 572 591 B1**
(45) Veröffentlichungstag und Bekanntmachung des Hinweises auf die Patenterteilung: **21.02.1996**
(21) Anmeldenummer: 92924528.0
(22) Anmeldetag: 11.12.1992
(51) Int. Cl.: A01D 34/73, A01G 3/04

(54) **VORRICHTUNG ZUM ABSCHNEIDEN VON LÄNGLICHEM SCHNITTGUT, INSBESONDERE VON HALMGUT**
DEVICE FOR CUTTING LONG ITEMS, IN PARTICULAR STALKED PLANTS
DISPOSITIF POUR LA COUPE D'OBJETS LONGS, EN PARTICULIER DE PLANTES A TIGE

(30) Priorität: 18.12.1991 CH 3745/91
(43) Veröffentlichungstag der Anmeldung: 08.12.1993
(73) Patentinhaber: LOCHER, Hans, Dr., CH-8610 Uster (CH)
(72) Erfinder: LOCHER, Hans, Dr., CH-8610 Uster (CH)
(86) Internationale Anmeldenummer: CH9200240
(87) Internationale Veröffentlichungsnummer: WO9311658

(56) Entgegenhaltungen:
- EP-A- 0 422 773
- AT-B- 103 525
- DE-A- 3 729 487
- DE-B- 1 223 601
- FR-A- 329 444
- GB-A- 1 379 073
- US-A- 4 048 791

## Beschreibung

Die vorliegende Erfindung liegt auf dem Gebiet der landwirtschaftlichen Mähmaschinen und der Rasenmäher für Grünflächenpflege, von denen heute im wesentlichen zwei Typen verbreitet sind, und zwar hauptsächlich die freischneidenden Kreiselmähmaschinen und, in geringerem Mass, die Balkenmäher.

Die Kreiselmähmaschinen, deren Prinzip auch bei vielen Rasenmähern angewendet wird, arbeiten mit einer sehr hohen Umfangsgeschwindigkeit der aussen an einem Rotor befestigten Schneidmesser. Diese Geschwindigkeit beträgt etwa 40 bis 80 Meter pro Sekunde, wodurch enorme Fliehkräfte entstehen. Wenn Fremdkörper, wie zum Beispiel Steine, in den Wirkungsbereich der Messer gelangen und weggeschleudert werden, besteht eine ernsthafte Gefährdung von Tieren und Menschen.

Bei Balkenmähern ergeben sich Reibungsprobleme zwischen dem feststehenden und dem sich bewegenden Teil des Mähsystems, insbesondere beim Eindringen von Sand, Schmutz oder Pflanzensaft in die Zone zwischen den beiden Teilen. Daraus resultiert ein auch im Leerlauf hoher Energieverbrauch. Ausserdem müssen die Messer regelmässig nachgeschliffen werden.

Da auch die rotierenden Kreiselmähmaschinen und die Rasenmäher als Folge der hohen Umfangsgeschwindigkeiten einen relativ hohen Leistungsaufwand besitzen, kommen für die bekannten Typen von Mähmaschinen und Rasenmähern nur zwei Antriebsarten in Frage, und zwar entweder ein Elektromotor mit Anschluss an das Stromnetz oder ein Benzin- oder Dieselmotor, letzterer entweder als Direktantrieb wie beim konventionellen Rasenmäher oder als indirekter Antrieb über die sogenannte Zapfwelle der Zugmaschine für landwirtschaftliche Maschinen. Beim Elektromotor ist durch die Länge des Stromkabels die Autonomie des Mähers eingeschränkt und es besteht die Gefahr, dass das Kabel vom Mäher erfasst wird. Beim Benzinmotor stören der Lärm und die Abgase, so dass die Verwendung derartiger Mäher zunehmend kontrolliert wird. So ist beispielsweise in einigen Ländern die Lärmemission bereits durch Verordnungen limitiert.

Bei den landwirtschaftlichen Anwendungen ist zudem noch das relativ hohe Gewicht der Mähmaschinen und deren Schlepper nachteilig, das bekanntlich zu äusserst unerwünschten Bodenverdichtungen führt.

Durch die Erfindung soll nun eine Mähvorrichtung angegeben werden, die sich durch einen niedrigen Energieverbrauch auszeichnet, und bei der keine Gefährdung von Menschen und Tieren durch wegfliegende Teile oder Gegenstände besteht. Ausserdem soll die erfindungsgemässe Mähmaschine auch möglichst leicht sein, damit keine unerwünschten Bodenverdichtungen entstehen.

Die Erfindung betrifft eine Vorrichtung zum Abschneiden von länglichem Schnittgut, insbesondere von Halmgut, mit einer Schneidzelle zum Fangen des Schnittguts, mit einem als Gegenlager für das Schnittgut wirkenden und eine Anschlagkante für dieses aufweisenden statischen Organ, und mit einem das Schnittgut in der Schneidzelle verdichtenden beweglichen Organ, wobei das Abschneiden des Schnittguts nach dem Verdichten durch Zusammenwirken der beiden Organe erfolgt. Solch eine Vorrichtung ist aus der AT-B-103525 bekannt.

Die erfindungsgemässe Vorrichtung ist dadurch gekennzeichnet, dass das bewegliche Organ so ausgebildet ist, daß es während des Abschneidens im wesentlichen parallel zur genannten Anschlagkante angetrieben ist, und dass die Bewegung beim Abschneiden wesentlich tangential zum Schnittgut erfolgt, und daß nach dem Abschneiden die Schneidzelle durch das bewegliche Organ zum Eintritt des Schnittguts Freigegeben ist.

Das erfindungsgemässe Merkmal, "dass das bewegliche Organ während des Schneidvorgangs im wesentlichen parallel zur genannten Anschlagkante angetrieben ist", bedeutet, dass die Bewegungskomponente des beweglichen Organs in der Richtung parallel zur Anschlagkante grösser ist als in der Richtung senkrecht zu dieser, und zwar beim Abschneiden des Schnittguts. Das bewegliche Organ bewegt sich also während der Schnittphase im wesentlichen entlang der Anschlagkante, und diese Bewegung ermöglicht den Tangentialschnitt des Schnittguts, der sich insbesondere durch einen äusserst geringen Energieaufwand und durch ebenso geringe Lärmemissionen auszeichnet.

Dieser Tangentialschnitt ist ein echter Schnitt, vergleichbar mit dem Schnitt eines Haushaltsmessers, der einen wesentlich geringeren Kraftaufwand erfordert, weil gleichzeitig mit dem Eindringen in das zu schneidende Gut eine Längsbewegung des Messers erfolgt. Dies hauptsächlich im Unterschied zu dem bei den bekannten freischneidenden Kreiselmähern üblichen Abschlagen oder Abkanten des Schnittguts. Kleinere Geschwindigkeit bedeutet aber weniger Energiebedarf, weniger Lärm, weniger Energieverluste durch Reibung und dergleichen und stark reduzierte Gefährdung durch weggeschleuderte Gegenstände.

Das Schnittgut besteht im wesentlichen aus Pflanzenfasern, die infolge ihrer relativ hohen Scherfestigkeit beim diagonalen Schnitt grosse Kräfte erfordern, wogegen beim tangentialen Schnitt relativ geringe Kräfte und auch tiefere Geschwindigkeiten genügen.

Wie praktische Versuche gezeigt haben, wird der Energiebedarf drastisch reduziert, und zwar um ungefähr 90%. Dies bedeutet aber, dass bei Rasenmähern ein Elektroantrieb mittels Batterie möglich wird, und zwar bei gleichzeitig reduziertem Gewicht des betreffenden Mähers. Dies hat zur Folge, dass einerseits batteriegetriebene Rasenmäher für die Grünflächenpflege möglich werden, und dass andererseits auch bei landwirtschaftlichen Mähern eine deutliche Gewichtsreduktion erzielt wird, was wiederum den Einsatz leichterer Zugmaschinen ermöglicht. Dadurch wird ein wesentlicher Beitrag zur Entlastung des Futtergrasbodens geleistet, weil dessen Verdichtung stark vermindert wird.

Eine erste bevorzugte Ausführungsform der Schneidvorrichtung ist gekennzeichnet durch eine Mehrzahl von nebeneinander angeordneten, einseitig offenen und je ein bewegliches Organ aufweisenden Schneidzellen mit annähernd U- oder V-förmigem Querschnitt, deren maulartige Oeffnung zum Eintritt des Schnittguts vorgesehen, und bei denen mindestens einer der beiden Schenkel als das genannte statische Organ ausgebildet ist.

Eine zweite bevorzugte Ausführungsform ist dadurch gekennzeichnet, dass jedes bewegliche Organ eine längliche Form aufweist und parallel zu dem das statische Organ bildenden Schenkel orientiert sowie kreisförmig angetrieben ist.

Gemäss einer dritten bevorzugten Ausführungsform ist das bewegliche und/oder das statische Organ als Schneidmesser ausgebildet. Hier hat sich besonders die letztere Variante als vorteilhaft erwiesen, weil in dieser Art ausgebildete Messer einfach auszuwechseln sind, was die Bedienungsfreundlichkeit eines derartigen Mähers ganz wesentlich erhöht. Selbstverständlich ist auch die erste Variante vorteilhaft, und es wird je nach Anwendung zu entscheiden sein, welcher Variante der Vorzug zu geben ist.

Eine weitere bevorzugte Ausführungsform betrifft eine erfindungsgemässe Vorrichtung zur Anwendung für Heckenscheren. Diese ist dadurch gekennzeichnet, dass das bewegliche Organ durch ein längliches, mit einem Wellschliff oder einer Verzahnung versehenes und relativ zur Anschlagkante schwenkbares Messer gebildet ist.

Es hat sich gezeigt, dass sich durch die Anwendung des Tangentialschnitts auch bei Heckenscheren eine beträchtliche Reduktion der Antriebsleistung um rund 85% ergibt, wodurch ein wesentlich leichterer Motor verwendet werden kann und die Handlichkeit stark verbessert wird. Ausserdem wird Batteriebetrieb möglich, und das bei geringem Gewicht der Batterie.

Im folgenden wird die Erfindung anhand von Ausführungsbeispielen und der Zeichnungen näher erläutert; es zeigt:
- Fig. 1a - 1c: Diagramme zur Erläuterung des Funktionsprinzips von drei Ausführungsbeispielen von erfindungsgemässen Schneidvorrichtungen,
- Fig. 2: eine perspektivische Darstellung einer nach dem Prinzip von Fig. 1a arbeitenden Schneidvorrichtung,
- Fig. 3a, 3b: Detailvarianten der Schneidvorrichtung von Fig. 2,
- Fig. 4: ein Detail einer nach dem Prinzip von Fig. 1b arbeitenden Schneidvorrichtung,
- Fig. 5: eine weitere Detailvariante der Schneidvorrichtung von Fig. 2,
- Fig. 6: eine Detailansicht einer nach dem Prinzip von Fig.1c arbeitenden Schneidvorrichtung,
- Fig. 7a- 7c: schematische Darstellungen einer erfindungsgemässen Schneidvorrichtung für landwirtschaftliche Anwendung,
- Fig. 8: eine Detailansicht einer mit einer erfindungsgemässen Schneidvorrichtung ausgerüsteten Heckenschere; und
- Fig. 9, 10: zwei bevorzugte Ausführungsbeispiele von Schneidzellen von erfindungsgemässen Schneidvorrichtungen.

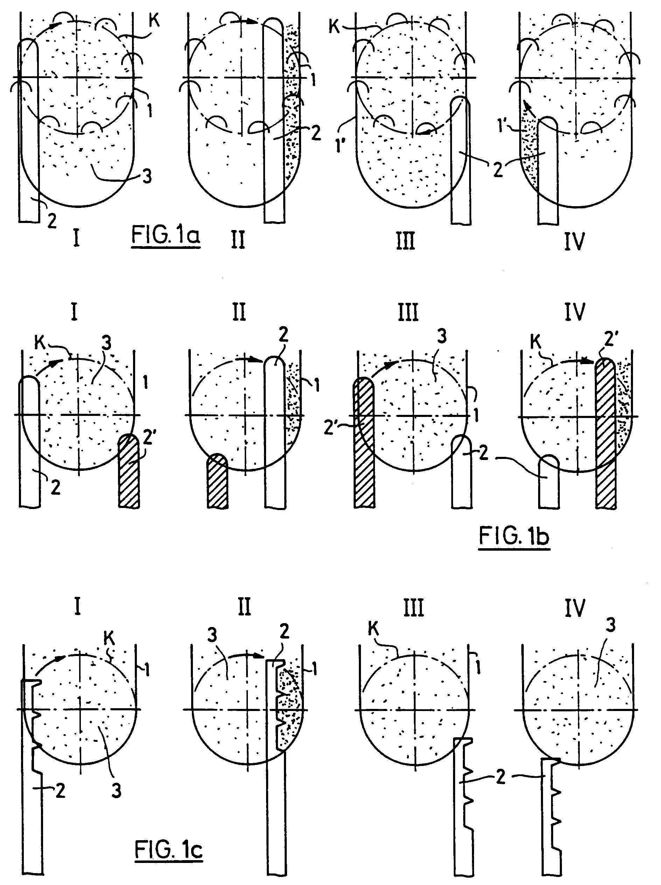

Die Fig 1a bis 1c zeigen anhand von Diagrammen in der Aufsicht das Funktionsprinzip einer erfindungsgemässen Schneidvorrichtung, wobei jeweils vier Momentanzustände eines Schneidzyklus dargestellt sind. Die Schneidvorrichtung weist in allen drei Figuren mindestens ein statisches Organ 1 und ein bewegliches Organ 2 auf, wobei beim Beispiel von Fig. 1a zwei statische Organe 1, 1' und beim Beispiel von Fig. 1b zwei bewegliche Organe 2, 2' vorgesehen sind. Wenn in der folgenden Beschreibung von einem beweglichen und einem statischen Organ die Rede ist, so sollen damit selbstverständlich auch die Ausführungsformen mit zwei statischen Organen 1 und 1' (Fig. 1a) und mit zwei beweglichen Organen 2 und 2' (Fig. 1b) mitumfasst sein.

Das statische Organ 1, 1' bildet Teil einer Schneidzelle 3, welche in den Figuren durch ein U symbolisiert ist und eine maulartige Oeffnung zum Eintritt des Schnittguts sowie einen Rand aufweist. Das statische Organ 1, 1' ist in der Schneidzelle 3, und zwar an deren Rand angeordnet, vorzugsweise entlang eines der Schenkel des U-förmigen Querschnitts, und bildet eine Anschlagkante für das Schnittgut. Es sei hier darauf hingewiesen, dass der Querschnitt der Schneidzelle 3 selbstverständlich nicht streng U-förmig zu sein braucht, sondern auch in Form eines V, eines auf dem Kopf stehenden Trapezes oder in einer Zwischenform ausgebildet sein kann.

Wesentlich ist eine Art von Maulform, welche dazu führt, dass bei einer Bewegung der Schneidzelle 3 relativ zum Schnittgut, wie sie beim Mähen regelmässig stattfindet, das Schnittgut in die Schneidzelle 3 gelangt und in dieser gefangen wird. Das bewegliche Organ 2, 2' ist kreisförmig angetrieben und weist eine längliche Form auf; es ist parallel zu der oder zu einer der das statische Organ 1, 1' bildenden Anschlagkanten orientiert.

Das in der Schneidzelle gefangene Schnittgut wird dann durch das Zusammenwirken des beweglichen Organs 2, 2' und des statischen Organs 1, 1' abgeschnitten. Dabei kann man sich dieses Abschneiden so vorstellen, dass das Schnittgut in der Schneidzelle 3 wie von einer ein Grasbüschel umgreifenden Hand verdichtet und anschliessend wie bei einem von Hand ausgeführten Messerschnitt tangential abgeschnitten wird.

In den Fig. 1a bis 1c ist jeweils strichpunktiert der Kreis K eingezeichnet, den die Spitze des beweglichen Organs 2, 2' während eines Schneidzyklus beschreibt. Auf diesem Kreis sind in Fig. 1a acht gegenseitig um 45° beabstandete Positionen dieser Spitze durch einen Halbkreis angedeutet, und die Diagrammen I bis IV der einzelnen Figuren zeigen jeweils eine charakteristische Position des beweglichen Organs 2, 2'.

In den Diagrammen I beginnt das in Pfeilrichtung angetriebene Organ 2 sich vom linken Rand der Schneidzelle 3 quer zur Oeffnung zu bewegen und schiebt dabei das in der Schneidzelle befindliche Schnittgut gegen den als Anschlagkante wirkenden rechten Rand, wobei das Schnittgut verdichtet wird. Im Diagramm II ist das Schnittgut schon stark verdichtet und es erfolgt bei der Weiterbewegung des beweglichen Organs 2 längs des Kreises K das Abschneiden des Schnittguts. Das in diesem Moment von der Verbindung zu den Wurzeln befreite Schnittgut neigt sich infolge der Vorwärtsbewegung des Mähers nach hinten und fliesst ab.

Jede Rotationsbewegung auf einer Fläche lässt sich bekanntlich als Summe zweier geradliniger Bewegungskomponenten darstellen. Wenn man diese Bewegungskomponenten so wählt, dass die eine parallel und die andere senkrecht zur Anschlagkante verläuft, dann sieht man, dass jedenfalls von der im Diagramm II bis zu der im Diagramm III dargestellten Position des beweglichen Organs 2 dessen Bewegungskomponente in der Richtung parallel zur genannten Anschlagkante grösser ist als in der Richtung senkrecht zu dieser. Da dies derjenige Teil des Schneidzyklus ist, in dem das Schnittgut abgeschnitten wird, kann man folglich sagen, dass das bewegliche Organ während des Schneidvorgangs im wesentlichen parallel zur Anschlagkante angetrieben ist.

In der Stellung von Diagramm III bewegt sich das bewegliche Organ 2 bereits wieder von der Anschlagkante weg zum linken Rand der Schneidzelle 3 zurück. In der Stellung von Diagramm IV befindet sich das bewegliche Organ 2 relativ zum linken Rand der Schneidzelle 3 in der gleichen Position wie in Diagramm II relativ zum rechten Rand. Nun wird das durch das bewegliche Organ 2 auf seinem Weg von der Stellung von Diagramm III zur Stellung von Diagramm IV zusammengeschobene und verdichtete Schnittgut geschnitten.

Aus diesem Ablauf ergeben sich mehrere Möglichkeiten für die Ausbildung des statischen und des beweglichen Organs 1, 1' bzw. 2, 2', von denen vorzugsweise wenigstens eines als Messer ausgebildet ist. Diese Möglichkeiten sind die folgenden:

Fig. 1a: Die Schneidzelle 3 ist deutlich tiefer als der Durchmesser des Kreises K, was dazu führt, dass auch bei der Bewegung des beweglichen Organs 2 zwischen den Positionen der Diagramme III und IV eine Verdichtung des Schnittguts erfolgt.

Entsprechend wirken beide Längsränder der Schneidzelle 3 als Anschlagkante, oder mit anderen Worten, die Schneidzelle 3 enthält zwei statische Organe 1 und 1'. In diesem Fall ist das bewegliche Organ 2 als Doppelmesser mit zwei Schneiden ausgebildet und man erhält zwei Schnitte pro Schneidzyklus, nämlich einen Gesamtschnitt allen Schnittguts in der Schneidzelle 3 und auch noch einen Teilschnitt des sich im unteren Teil der Schneidzelle 3 befindlichen Schnittguts.

Fig. 1b: Die Schneidzelle 3 hat etwa die Tiefe des Durchmessers des Kreises K und es kommt bei der Rückwärtsbewegung des beweglichen Organs 2 von der Stellung III in die Stellung IV zu keiner nennenswerten Verdichtung des Schnittguts, so dass nur eine Anschlagkante und somit nur ein statisches Organ 1 vorgesehen ist. Entsprechend weist das bewegliche Organ nur an seiner der Anschlagkante benachbarten rechten Kante eine Schneide auf.

Wenn in Fig. 1b nur eines der beiden eingezeichneten beweglichen Organe 2, 2' vorgesehen wäre, dann würde sich nur ein Schnitt pro Schneidzyklus ergeben und die Schnittleistung wäre nur halb so gross wie beim Beispiel von Fig. 1a. Darstellungsgemäss sind jedoch zwei gegeneinander um 180° versetzte bewegliche Organe 2 und 2' vorgesehen, so dass die Schnittleistung etwa gleich ist wie beim Beispiel von Fig. 1a.

Fig. 1c: Hier sind die Funktionen von statischem und beweglichem Organ insofern vertauscht, als die das statische Organ 1 bildende Anschlagkante der Schneidzelle 3 als Schneidmesser wirkt. Das bewegliche Organ dient nur zur Verdichtung des Schnittguts und weist an seiner das Schnittgut verdichtenden Kante eine eine gute Schnittgutmitnahme ermöglichende Formgebung auf. Diese Formgebung kann beispielsweise in einer Riffelung oder Verzahnung bestehen. Analog zu Fig. 1b entspricht die Schneidzellentiefe etwa dem Durchmesser des Kreises K, so dass die Schnittleistung etwa 50% derjenigen von Fig. 1a beträgt. Man kann diese verdoppeln, wenn man analog zu Fig. 1b zwei um 180° versetzte bewegliche Organe verwendet.

Als weitere Variante zu Fig. 1c kann in Analogie zu Fig. 1a die Schneidzelle 3 tiefer sein als der Durchmesser des Kreises K und das bewegliche Organ 2 kann an beiden Längskanten mit einer Riffelung oder Verzahnung versehen sein. Entsprechend würde dann auch der linke Längsrand der Schneidzelle 3 als statisches Organ 1' wirken und wäre in diesem Fall als Messer ausgebildet. Selbstverständlich könnten in allen Fällen sowohl das bewegliche als auch das statische Organ eine Schneide tragen und als Messer wirken, oder man könnte, was aber eher selten der Fall sein wird, auf Messer verzichten. Es ist möglich, die verschiedenen Varianten, kurze oder lange Schneidzelle, statisches oder bewegliches Organ als Schneidmesser, ein oder zwei bewegliche Organe, beliebig miteinander zu kombinieren.

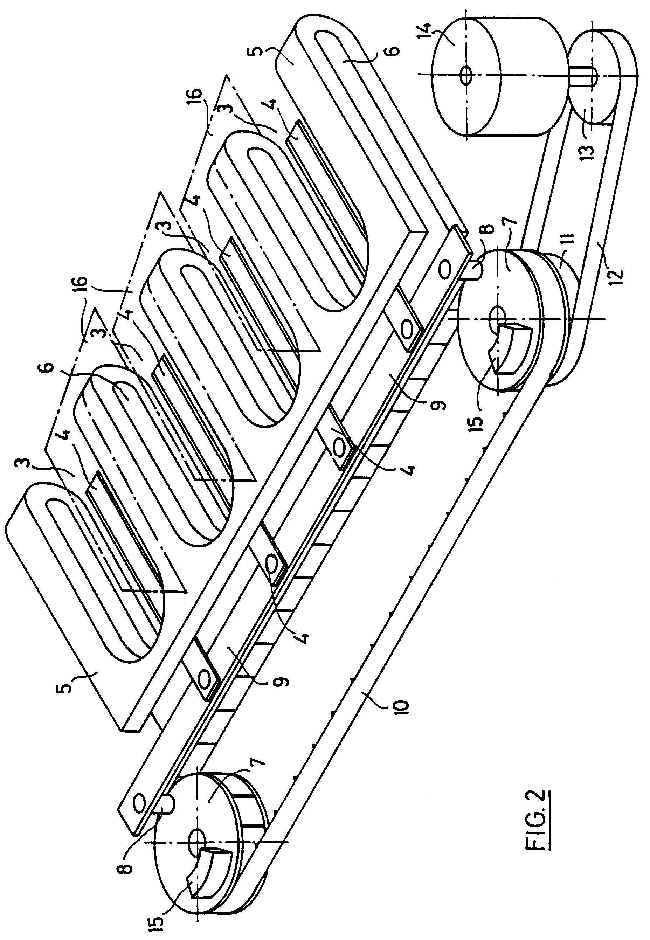

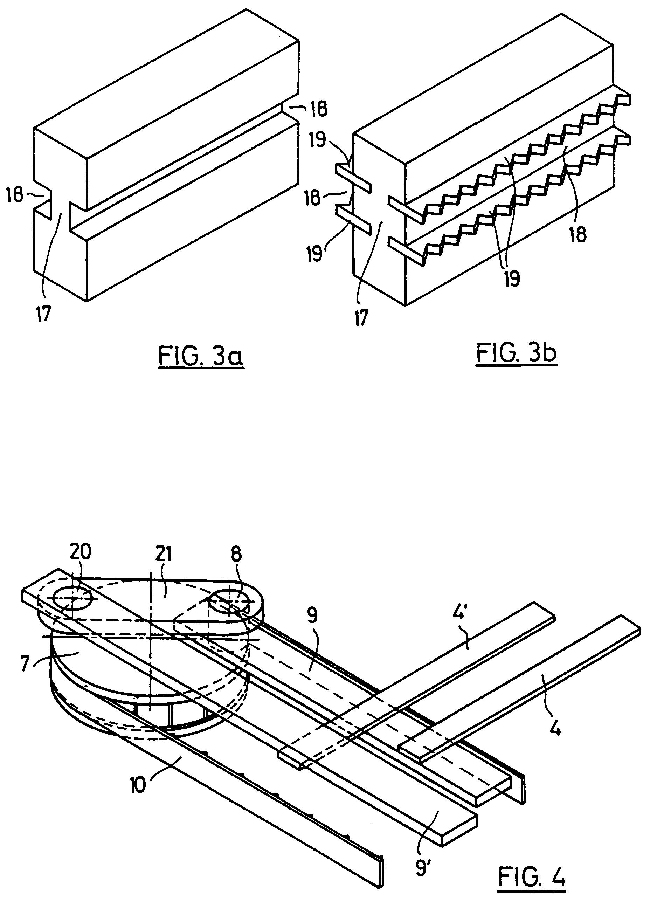

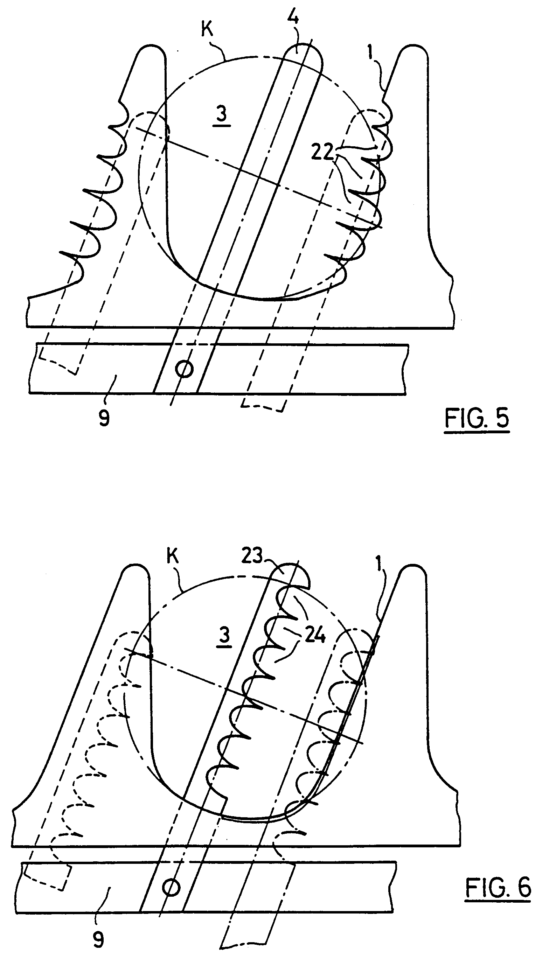

Anschliessend werden nun Ausführungsformen von Schneidvorrichtungen für die einzelnen in den Fig. 1a bis 1c dargestellten prinzipiellen Möglichkeiten beschrieben. Dabei zeigt Fig. 2 eine Schneidvorrichtung und Fig. 5 die Schneidzelle einer solchen entsprechend dem Prinzip von Fig. 1a, Fig. 4 ein Detail einer Schneidvorrichtung nach dem Prinzip von Fig. 1b und Fig. 6 die Schneidzelle einer Schneidvorrichtung nach dem Prinzip von Fig. 1c.

Fig. 2 zeigt eine Ansicht eines Mährotors mit vier nebeneinander angeordneten Schneidzellen 3. Der Mährotor ist in der Praxis wesentlich breiter und enthält dementsprechend auch mehr Schneidzellen. Die lichte Weite der Schneidzellen liegt in der Grössenordnung von Zentimetern und beträgt beispielsweise bei Rasenmähern für die Grünflächenpflege etwa 3 bis 4 cm und bei landwirtschaftlichen Mähern etwa 5 bis 7 cm. Jede Schneidzelle enthält ein kreisförmig antreibbares Messer 4 von länglicher Gestalt, welches Parallel zu den Schenkeln oder Seitenkanten der Schneidzellen orientiert und an beiden Längskanten je mit einer Schneide versehen ist.

Der Mährotor besteht aus einem zweiteiligen, sandwichartigen Mähbalken 5, zwischen dessen beiden Teilen ein nach vorne in Mährichtung abgeschlossener, ansonsten aber freier Zwischenraum 6 gebildet ist. In diesen Zwischenraum können die Messer 4 im Bereich der Seitenkanten der Schneidzellen 3 seitlich eintreten, wodurch die Schnittsicherheit erhöht wird. Im Bereich des Grundes der Schneidzellen 3 ermöglicht der genannte Zwischenraum 6 einen freien Durchtritt der Enden der Messer 4 zu ihrem Antrieb.

Der Antrieb der Messer 4 ist durch eine auf Antriebsrädern 7 über je einen Exzenterbolzen 8 exzentrisch gelagerte Schubstange 9 gebildet, auf welcher die Messer 4 auswechselbar befestigt sind. Die beiden Antriebsräder 7 sind kraftschlüssig, also schlupflos, miteinander verbunden, darstellungsgemäss durch einen Zahnriemen 10. Auf der Achse eines der beiden Antriebsräder 7 ist eine Antriebsscheibe 11 montiert, die über einen Riemen 12 mit der Riemenscheibe 13 eines Motors 14 verbunden ist.

Zum Ausgleich der durch die exzentrische Lagerung der Schubstange 9 entstehenden Unwucht trägt jedes Antriebsrad 7 eine entsprechende Kompensationsmasse 15. Bei längeren Schubstangen kann gegebenenfalls zwischen den Antriebsrädern 7 ein Stützrad in der Art der Antriebsräder angeordnet sein, das dann ebenfalls mit einer Kompensationsmasse versehen sein müsste.

Damit das Schnittgut nach dem Schnitt nicht in eine benachbarte Schneidzelle fällt, sondern mir Sicherheit nach hinten abfliesst, sind zwischen den einzelnen Schneidzellen 3 in Fig. 2 strichpunktiert dargestellte Trennbleche 16 vorgesehen. Wenn man diese, so wie in der Figur angedeutet, keil- oder flügelartig und vom Mähbalken 5 nach vorne wegragend ausbildet, dann bewirken sie ausserdem eine Auftrennung der oft untereinander verwachsenen Gräser und Halme, was den Schnitt erleichtert.

Als weiteres Mittel zur Verhinderung des Eindringens von Schnittgut in eine benachbarte Schneidzelle 3 kann der Zwischenraum 6 (Fig. 2) gemäss den Fig. 3a und 3b durch einen Steg 17 abgeschlossen sein, so dass bei jeder Seitenkante eine nutenartige Vertiefung 18 zum zumindest teilweisen Eintritt der Messer 4 (Fig. 2) gebildet ist. Zur besseren Fixierung des Schnittguts an den Seitenkanten kann gemäss Fig. 3b die Nut 18 zwischen zwei Profilschienen 19 mit einer gezackten oder geriffelten Kante gebildet sein, welche Kante nicht nur als Gegenlager oder Anschlag für das Schnittgut wirkt, sondern dieses auch während der Verdichtung und beim Abschneiden gegen Verrutschen entlang der Kante fixiert.

Der in Fig. 2 dargestellte Antrieb der das bewegliche Organ 2 (Fig. 1a) bildenden Messer 4 kann im wesentlichen für alle Ausführungsformen verwendet werden, auch für diejenigen, wo das bewegliche Organ nur als Gegenlager für das Schnittgut dient (Fig. 1c). Bei Verwendung von zwei beweglichen Organen pro Schneidzelle (Fig. 1b) ist der Antrieb entsprechend zu modifizieren, was aus Fig. 4 ersichtlich ist, welche den Antrieb im Bereich des in Fig. 2 linken Antriebsrades 7 zeigt. Darstellungsgemäss ist eine zweite Schubstange 9' vorgesehen, auf welcher eine Reihe von zweiten Messern 4' befestigt ist. Die zweite Schubstange 9' ist über einen Bolzen 20 mit einer Trägerplatte 21 gelenkig verbunden, welche ihrerseits auf dem Exzenterbolzen 8 (Fig. 2) starr befestigt ist. Der Bolzen 20 liegt bezüglich der Rotationsachse des Antriebsrades 7 symmetrisch zum Exzenterbolzen 8, so dass die ersten und zweiten Messer 4 und 4' je eine gleiche, jedoch um 180° phasenverschobene Bewegung vollführen. Die in Fig. 2 vorgesehene Kompensationsmasse 15 ist bei geeigneter Dimensionierung des Bolzens 20 nicht mehr erforderlich. Im Bereich des in Fig. 2 rechten Antriebsrades 7 ist der Antrieb entsprechend ausgebildet.

Fig. 5 zeigt eine Variante der Schneidzelle 3 des in Fig. 2 dargestellten Mährotors, die speziell für dicht gewachsenes Halmgut und solches mit sehr zähen Stengeln gut geeignet ist, welches einen starken Halt beim Schnitt erfordert. Es hat sich gezeigt, dass die in Fig. 3b dargestellte Variante mit den eine gezackte oder eine geriffelte Kante aufweisenden Profilschienen für Halmgut dieser Art nicht in jedem Fall den erforderlichen Halt gewährt, so dass es sich empfiehlt, die Anschlagkante mit Einbuchtungen 22 zu versehen, in welche das Schnittgut gedrängt und in denen es auch verdichtet wird. Das Schnittgut ist in den Einbuchtungen 22 gefangen und kann dem als Messer 4 ausgebildeten beweglichen Organ 2 (Fig. 1a) nicht ausweichen.

Als weiterer Unterschied zu Fig. 2 sind das Messer 4 und die das statische Organ 1 bildende Anschlagkante nicht senkrecht zur Schubstange 9 orientiert, sondern um etwa 20° bis 30° zur Vertikalen geneigt. Diese Anordnung hat den Vorteil, dass der Abfluss des geschnittenen Halmguts entgegen der Mährichtung, also nach hinten, begünstigt wird.

Selbstverständlich könnte hier analog zu Fig. 1a die Tiefe der Schneidzelle 3 wesentlich grösser sein als der Durchmesser des Kreises K und es könnte ein Doppelmesser verwendet werden. In diesem Fall empfiehlt es sich, im Uebergangsbereich zwischen dem bogenförmigen Grund der Schneidzelle 3 und deren das zweite statische Organ bildenden linken Anschlagkante ebenfalls Einbuchtungen von der Art der Einbuchtungen 22 vorzusehen.

Fig. 6 zeigt eine Ansicht einer Schneidzelle 3 einer nach dem Prinzip von Fig. 1c arbeitenden Schneidvorrichtung, bei der das statische Organ 1 als Schneidmesser und das bewegliche Organ 2 (Fig.1c) als Zubringer 23 für das Schnittgut ausgebildet ist. Der Zubringer 23 ist kammartig geformt und weist entlang seiner dem statischen Organ 1 zugewandten Längskante Einbuchtungen 24 auf, wodurch das Schnittgut bei der Bewegung bis zum statischen Organ 1 am rechten Rand der Schneidzelle 3 zu einem erheblichen Teil gefasst und damit weitgehend positiv geführt ist, was zu einer Erhöhung der Schneidsicherheit führt.

Der Zubringer 23 ist auf der Schubstange 9 befestigt, jedoch nicht wie in Fig. 1c unter einem rechten Winkel, sondern in einer Schrägstellung von etwa 20° bis 30° zur Vertikalen. Das als Messer ausgebildete statische Organ 1 weist dieselbe Neigung auf wie der Zubringer 23; der Verlauf der Schneidkante ist in der Figur durch einen Doppelstrich angedeutet.

Der als bewegliches Organ dienende Zubringer 23 ist in drei Positionen dargestellt, und zwar in einer strichlierten Stellung links unmittelbar vor dem Eintritt in die Schneidzelle 3, in einer voll ausgezogenen Mittelstellung und in einer strichpunktiert eingezeichneten Stellung rechts, unmittelbar nach Beginn des Tangentialschnitts.

Der Zubringer 23 kann dicht unter- oder oberhalb des statischen Organs 1 angeordnet oder er kann auch als Doppelorgan aus zwei im wesentlichen gleichen Teilen ausgebildet sein. Im letzteren Fall ist der eine Teil des Doppelorgans dicht unterhalb und der andere Teil dicht oberhalb des statischen Organs angeordnet und die beiden Teile sind miteinander verbunden, und zwar vorzusweise im Bereich der Spitze des Zubringers, so dass dieser mit seinen beiden Teilen das statische Organ von der Schneidzelle 3 her klauenartig umgreifen kann. Diese Ausbildung des Zubringers 23 führt zusammen mit der Schrägstellung von statischem Organ 1 und Zubringer zu einer Verbesserung des Abflusses des geschnittenen Schnittguts nach hinten.

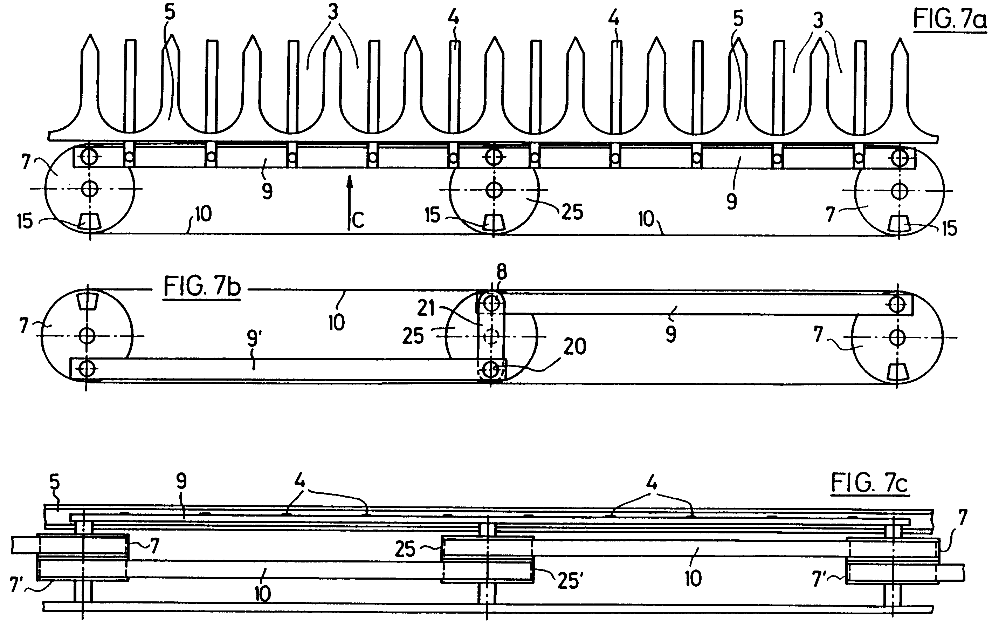

In den Fig. 7a bis 7c ist eine für landwirtschaftliche Anwendung vorgesehene Mähvorrichtung dargestellt, wobei Fig. 7a eine Draufsicht auf einen Mähbalken und Fig. 7c eine Ansicht in Richtung des Pfeiles C von Fig. 7a zeigt. Fig. 7b zeigt eine Variante des Antriebs des Mähbalkens von Fig. 7a.

Bei landwirtschaftlichen Mähmaschinen betragen die Mähbreiten etwa 1,5 bis 2 Meter, was entsprechend lange Schubstangen 9 (Fig. 2) erfordert, die dann zur Erzielung der nötigen Steifigkeit ein relativ hohes Gewicht aufweisen. Wie bereits bei der Beschreibung von Fig. 2 erwähnt wurde, lässt sich dieses Problem durch Anordnung von Stützrädern 25 lösen, die einerseits als Auflage für die Schubstange 9 dienen und andererseits so wie die Antriebsräder 7 kraftschlüssig angetrieben sind. Gemäss Fig. 7a erfolgt der Antrieb des Stützrades 25 durch den die beiden Antriebsräder 7 kraftschlüssig verbindenden Zahnriemen 10. Das Stützrad 25 ist so wie die Antriebsräder 7 mit einer Kompensationsmasse 15 zum Unwuchtausgleich versehen.

Auf die Kompensationsmasse 15 für das Stützrad 25 kann verzichtet werden, wenn anstelle einer einzigen Schubstange 9 deren zwei verwendet werden, welche mit einer Phasenverschiebung von 180° angetrieben sind. Gemäss Fig. 7b trägt in diesem Fall das Stützrad 25 analog zu Fig. 4 auf dem Exzenterbolzen 8 für die erste Schubstange 9 eine Trägerplatte 21 mit einem Bolzen 20, auf dem die zweite Schubstange 9' angelenkt ist. Diese Ausführungsform hat den Vorteil, dass wegen der Phasenverschiebung der beiden Schubstangen die von diesen getragenen Messer ebenfalls um 180° phasenverschoben zum Einsatz kommen, wodurch das für einen Schnitt pro Mähbalkenlänge oder Mähbreite erforderliche Drehmoment halbiert wird.

Die beschriebene Schneid- oder Mähvorrichtung kann durch Zusammensetzen einzelner Module der in Fig. 2 dargestellten Art einfach an beliebige Mähbreiten angepasst werden. Dieses Zusammensetzen gestaltet sich besonders dann sehr einfach, wenn gemäss Fig. 7c pro Lagerstelle der Schubstangen 9 zwei übereinander angeordnete Antriebsräder 7, 7' bzw. 25, 25' vorgesehen sind, wobei der Antrieb zwischen benachbarten Antriebs- oder Stützrädern durch abwechselnd die oberen oder die unteren Räder verbindende Zahnriemen 10 erfolgt.

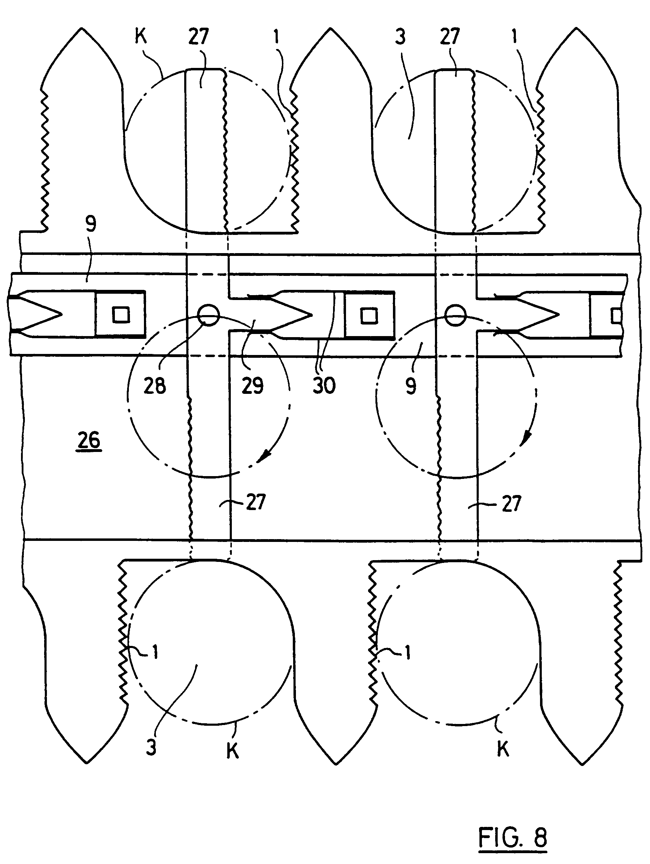

Neben der Anwendung für Rasenmäher für Grünflächenpflege und für landwirtschaftliche Mäher kann die erfindungsgemässe Schneidvorrichtung auch für Heckenscheren eingesetzt werden, wofür die Fig. 8 ein Beispiel gibt. Figur 8 ist im Massstab von etwa 2:1 gehalten und zeigt in Draufsicht einen Ausschnitt aus dem Schneidbalken einer Heckenschere, welcher eine übliche Länge von etwa 45 bis 60 cm aufweist und aus einem Steg- oder schienenartigen Mittelteil mit beidseitig angeordneten Schneidzellen 3 besteht.

Die Schneidzellen 3, welche in der Art der Schneidzellen des Mähbalkens von Fig. 7a ausgerüstet sind und je ein als Messer 27 ausgebildetes bewegliches Organ 2 (Fig. 1a) aufweisen, sind symmetrisch zum Mittelteil des Schneidbalkens 26 angeordnet, so dass jeweils zwei einander gegenüberliegenden Schneidzellen zu beiden Seiten des Schneidbalkens 26 ein gemeinsames Messer 27 zugeordnet ist.

Entlang des Mittelteils des Schneidbalkens 26 sind analog zu den Fig. 2 und 7 durch Zahnriemen angetriebene Antriebsräder (nicht dargestellt) vorgesehen, von welchen eine Schubstange 9 angetrieben ist. Auf der Schubstange 9 sind in einem der Teilung der Schneidzellen 3 entsprechenden Abstand die Messer 27 befestigt, welche sich zu beiden Seiten der Schubstange 9 gegen die jeweiligen Schneidzellen 3 erstrecken. Die Geometrie der Anordnung und die Abmessungen der Messer 27 und des Kreises K (Fig. 1a) sind so gewählt, dass die Messer immer nur in eine der beiden Schneidzellenreihen, in Fig. 8 ist das die obere Reihe, voll eingetaucht sind. Nach einer Weiterbewegung der Schubstange 9 um 180° sind dann die Messer 27 in die untere Schneidzellenreihe voll eingetaucht.

Im Unterschied zu den bisher beschriebenen Ausführungsformen sind die Messer 27 auf der Schubstange 9 nicht starr sondern um einen Lagerbolzen 28 schwenkbar befestigt. Die Messer 27 weisen einen fingerförmigen Ansatz 29 auf, an dem zu beiden Seiten je eine Blattfeder 30 angreift, wodurch die Messer 27 mit Federkraft unter Vorspannung in ihre in der Figur dargestellte Normalposition gedrückt und in dieser positioniert sind. Darstellungsgemäss sind die Messer 27 an ihrer Schneidkante mit einem Wellschliff oder einer Art von Verzahnung versehen, und die das statische Organ 1 bildende Anschlagkante der Schneidzelle 3 weist eine zur Fixierung des Schnittguts dienende Verzahnung auf.

Die schwenkbare Lagerung ermöglicht ein Ausweichen der Messer 27 bei dickeren Zweigen, die dann nicht in einem Messerumlauf geschnitten werden müssen. Praktische Versuche haben ergeben, dass mit Wellschliff-Messern Zweige bis zu einem Durchmesser von etwa 6 bis 7 Millimetern in einem einzigen Schnitt durchgetrennt werden, und dass bis Dicken von 8 bis etwa 10 mm bis zu drei Schnitte erforderlich sind, was bei einer üblichen Drehzahl von etwa 1200 Umdrehungen pro Minute eine Schnittzeit in der Grössenordnung von Zehntelsekunden ergibt.

Für dickere Aeste von 10 bis 20 mm Durchmesser, die zwar in Hecken eher selten sind, aber trotzdem vorkommen, sind am Ende des Schneidbalkens 26 bei den Handgriffen spezielle Sägezellen vorgesehen. Diese sind grösser als die dargestellten Schneidzellen 3 und enthalten anstatt des Messers 27 ein entsprechendes fuchsschwanzartiges Sägeblatt, mit dem die Aeste einzeln abgesägt werden können.

Durch diese Sägezellen und durch die schwenkbaren Messer sind die bei den bekannten Heckenscheren schon bei relativ dünnen Zweigen auftretenden Blockierungen praktisch ausgeschlossen. Schwenkbare Messer der beschriebenen Art können auch bei den Mäher-Anwendungen als Sicherheitsvorrichtung gegen Steine und dergleichen verwendet werden.

Aufgrund des gegenüber konventionellen Heckenscheren um etwa 85% reduzierten Energieverbrauchs wird der Antriebsmotor der beschriebenen Heckenschere entsprechend leichter und deren Gesamtgewicht sinkt erheblich. Darüber hinaus ermöglicht diese Reduktion des Energieverbrauchs erstmals einen Antrieb mittels elektrischer Batterien für eine realistische Betriebsdauer. Dabei können die Batterien entweder auf dem Körper der Bedienungsperson getragen oder in einer Abstellbox angeordnet werden.

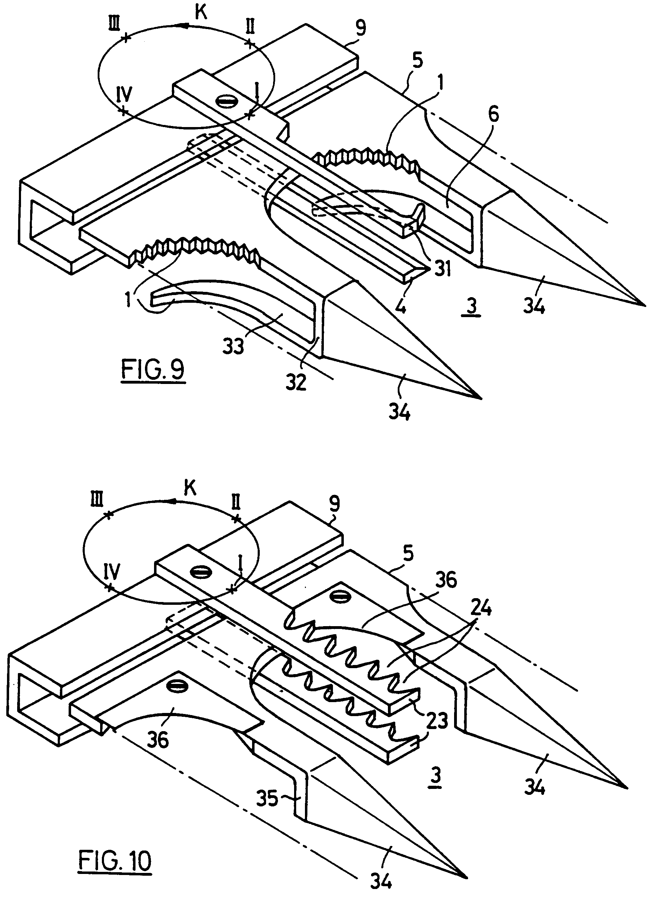

In den Figuren 9 und 10 sind zwei Ausführungsbeispiele für Schneidzellen 3 dargestellt, die sich im praktischen Einsatz besonders gut bewährt haben, und die sich im wesentlichen dadurch unterscheiden, dass im einen Fall (Fig. 9) das bewegliche und im anderen Fall (Fig. 10) das statische Organ als Messer ausgebildet ist.

Beim Beispiel von Fig. 9 ist das bewegliche Organ 2 (Fig. 1) als Zwillingsorgan ausgebildet und besteht aus einem Messer 4 und einem Haken 31. Die Schubstange 9 (Fig. 2) ist als liegendes U-Profil ausgebildet und der Haken 31 ist auf der oberen und das Messer 4 auf der unteren horizontalen Seitenwand des Profils befestigt, so dass das Messer 4 und der Haken 31 im Betrieb die gleiche Kreisbahn K beschreiben.

Der Mähbalken 5 ist an seiner von der Schubstange 9 abgewandten Stirnseite über einen Steg 32 mit parallel zum Mähbalken angeordneten flügelartigen Teilen 33 verbunden. An den Stegen sind hörnerartige Organe 34 zum Auftrennen des Schnittguts befestigt. Der an seinen seitlichen Enden am Mäher befestigte Mähbalken 5 enthält mehrere Schneidzellen 3 mit je einer Anschlagkante 1 oberhalb und unterhalb des Messers 4. Die oberen Anschlagkanten sind mit einer Verzahnung versehen, die unteren Anschlagkanten 1 sind an den flügelartigen Teilen 33 gebildet und können bei Bedarf ebenfalls mit einer Verzahnung versehen werden. Zwischen den flügelartigen Teilen 33 und dem Mähbalken 5 besteht ein den freien Durchtritt der Messer 4 ermöglichender Zwischenraum 6.

Während eines Schneidzyklus beschreiben alle Teile des durch das Messer 4 und den Haken 31 gebildeten beweglichen Organs den eingezeichneten Kreis K, auf dem vier Positionen I bis IV markiert sind. Position I bezeichnet den dargestellten Momentanzustand, in welchem sich das Mähgut bereits verdichtet im rechten Teil der Schneidzelle 3 befindet.

Von der Position I bewegt sich das Messer 4 im Gegenuhrzeigersinn rückwärts auf die Position II zu und es erfolgt der Tangentialschnitt. Unmittelbar beim oder nach dem Schneiden wird der Haken 31 wirksam; er schiebt das geschnittene Mähgut zusammen und zieht es nach hinten, wodurch es in dieser Richtung weggeschleudert wird. Somit ist der Abfluss des Mähguts nicht nur durch die Vorwärtsbewegung des Mähers sondern zusätzlich noch durch die vom Haken 31 ausgeübte Zugwirkung sichergestellt.

Während der Bewegung auf dem Kreis K von der Position II zur Position IV befinden sich Messer 4 und Haken 31 gänzlich ausserhalb der Schneidzelle 3, so dass das sich von vorne nähernde Mähgut ungestört in die Schneidzelle 3 eintreten kann. Erst bei Position IV treten das Messer 4 und der Haken 31 wieder in die Schneidzelle 3 ein und beginnen mit der Verdichtung des Mähguts.

Die in Fig. 9 dargestellte Anordnung mit dem beweglichen Messer 4 eignet sich speziell für Grünflächen mit viel Unkraut, das auch zähe und grobe Stengel aufweisen kann. Bei Zierrasen, bei dem die feinen Gräser dominieren, fehlt jedoch derartiges Unkraut weitgehend. Hier ist das in Fig. 10 dargestellte Ausführungsbeispiel mit einem feststehenden Messer 36 sehr vorteilhaft.

Bei dem in Fig. 10 dargestellten Ausführungsbeispiel ist ebenso wie in Fig. 9 die Schubstange 9 als liegendes U-Profil und das bewegliche Organ 2 (Fig. 1) als Zwillingsorgan ausgebildet. Letzteres besteht aus zwei beabstandet übereinander angeordneten Zubringern 23, von denen der obere auf der oberen und der untere auf der unteren Seitenwand des die Schubstange 9 bildenden Profils befestigt ist.

Der Mähbalken 5 ist an seiner von der Schubstange 9 abgewandten Stirnseite mit abgewinkelten Stegen 35 versehen, auf denen hörnerartige Trennorgane 34 für das Mähgut montiert sind. Die Anschlagkanten der Schneidzellen 3 sind durch in diese eingesetzte Messer 36 gebildet, und die ober- und unterhalb der Messer 36 liegenden Zubringer 23 weisen an ihrer dem Messer 36 zugewandten Längskante Einbuchtungen 24 auf, welche so geformt sind, dass die Gräser einerseits leicht ein- und austreten können, andererseits jedoch derart fixiert sind, dass sie beim Schnitt an der Schneidkante der Messer 36 nicht ausweichen können. Die Messer 36 sind auf dem Mähbalken 5 einfach auswechselbar befestigt.

Durch die beidseitig der Messer 36 angeordneten kammartigen Zubringer 23 werden die Gräser doppelt gefasst und derart an der Schneidkante der Messer entlanggeführt, dass ein tangentialer Schnitt erfolgt. Da nicht scharfe Messer sondern stumpfe Zubringer bewegt werden, ist die mögliche Verletzungsgefahr von Mensch und Tier weitgehend ausgeschlossen.

Die kreisförmige Bewegung der Zubringer 23 ist durch einen Kreis K angedeutet, auf dem analog zu Fig. 9 vier Positionen I bis IV markiert sind. Die Schneidkanten der Messer 36 bilden ungefähr einen Viertelkreis zwischen den Positionen II und III auf dem die Bewegungsbahn der Zubringer 23 repräsentierenden Kreis K. Der Bereich, in dem der Tangentialschnitt erfolgt, liegt innerhalb dieses Viertelkreises. Der Mähbalken 5 ist im Bereich der Messer 36 so ausgebildet, dass die sich beim Schnitt bildenden Stoppeln keinen Stau verursachen, sondern zurückweichen können.

Die einzelnen Einbuchtungen 24 der Zubringer 23 sind so zu dimensionieren, dass darin rund 5 bis 10 Ziergräser in verdichteter Form Platz finden. Beobachtungen und Messungen haben nämlich ergeben, dass bei einem Mäher der beschriebenen Art mit einem der Ausdehnung des Schneidraums innerhalb einer Schneidzelle 3 entsprechenden Durchmesser des Kreises K von rund 3cm, pro Schneidzyklus etwa 40 bis höchstens 60 Gräser zu schneiden sind.

Die Gräser werden beim Erfassen durch die Zubringer 23 momentan auf eine Umfangsgeschwindigkeit von etwa 3 bis 4 Metern pro Sekunde beschleunigt und verlassen nach dem Schnitt die Schneidzelle 3 in der Richtung nach hinten in den gemähten Teil der Grünfläche. Dabei fallen sie entweder zu Boden oder auf ein zu einem Grassammler führendes Transportband. Dadurch ist in jedem Fall der eminent wichtige Grasabfluss auf sehr zufriedenstellende Weise sichergestellt.

## Patentansprüche

1. Vorrichtung zum Abschneiden von länglichem Schnittgut, insbesondere von Halmgut, mit einer Schneidzelle (3) zum Fangen des Schnittguts, mit einem als Gegenlager für das Schnittgut wirkenden und eine, Anschlagkante für dieses aufweisenden statischen Organ (1,1'), und mit einem das Schnittgut in der Schneidzelle (3) verdichtenden beweglichen Organ (2,2'), wobei das Abschneiden des Schnittguts nach dem Verdichten durch Zusammenwirken der beiden Organe erfolgt, dadurch gekennzeichnet, dass das bewegliche Organ (2,2') so ausgebildet ist, daß es während des Abschneidens im wesentlichen parallel zur genannten Anschlagkante (1,1') angetrieben ist, und die Bewegung beim Abschneiden wesentlich tangential zum Schnittgut erfolgt, und dass nach dem Abschneiden die Schneidzelle (3) durch das bewegliche Organ (2,2') zum Eintritt des Schnittguts freigegeben ist.

2. Vorrichtung nach Anspruch 1, gekennzeichnet durch eine Mehrzahl von nebeneinander angeordneten, einseitig offenen und je ein bewegliches Organ (2,2') aufweisenden Schneidzellen (3) mit annähernd U- oder V-förmigem Querschnitt, deren maulartige Oeffnung zum Eintritt des Schnittguts vorgesehen, und bei denen mindestens einer der beiden Schenkel als das genannte statische Organ (1,1') ausgebildet ist.

3. Vorrichtung nach Anspruch 2, dadurch gekennzeichnet, dass jedes bewegliche Organ (2,2') eine längliche Form aufweist und parallel zu dem das statische Organ (1,1') bildenden Schenkel orientiert sowie kreisförmig angetrieben ist.

4. Vorrichtung nach Anspruch 3, dadurch gekennzeichnet, dass das bewegliche und/oder das statische Organ (2,2') bzw. (1,1') als Schneidmesser (4,4') ausgebildet ist.

5. Vorrichtung nach Anspruch 4, dadurch gekennzeichnet, dass jeder ein statisches Organ (1,1') bildende Schenkel in der Vorschubrichtung der Schneidvorrichtung oder schräg zu dieser orientiert ist.

6. Vorrichtung nach Anspruch 5, dadurch gekennzeichnet, dass bei schräger Anordnung der statischen Organe (1,1') deren Neigungswinkel zur Vorschubrichtung 20° bis 30° beträgt.

7. Vorrichtung nach Anspruch 5, dadurch gekennzeichnet, dass die Tiefe der Schneidzellen (3) mindestens gleich gross ist wie der Durchmesser des Bewegungskreises (K) der beweglichen Organe (2,2').

8. Vorrichtung nach Anspruch 7, dadurch gekennzeichnet, dass pro Schneidzelle (3) zwei als Messer (4,4') ausgebildete bewegliche Organe (2,2') vorgesehen sind, deren Antrieb mit einer Phasenverschiebung von 180° erfolgt.

9. Vorrichtung nach Anspruch 7, dadurch gekennzeichnet, dass die als statisches Organ (1,1') dienende Anschlagkante jeder Schneidzelle (3) mit Mitteln zum Fixieren des Schnittguts ausgerüstet ist.

10. Vorrichtung nach Anspruch 9, dadurch gekennzeichnet, dass die genannten Mittel durch eine Verzahnung (19), eine Riffelung oder durch Einbuchtungen (22) gebildet sind.

11. Vorrichtung nach Anspruch 7 oder 9, dadurch gekennzeichnet, dass die Anschlagkanten jeweils paarweise, ober- und unterhalb der Messerebene vorgesehen sind, und dass zwischen den Anschlagkanten jedes Paares ein Zischenraum (6) oder eine nutenförmige Vertiefung (18) zum zumindest teilweisen Eintritt des Messers (4) gebildet ist.

12. Vorrichtung nach Anspruch 11, dadurch gekennzeichnet, dass jedem Messer (4) ein jenseits einer der Anschlagkanten (1) angeordneter und gemeinsam mit dem Messer antreibbarer Haken (31) zur Verdichtung des Schnittguts und zur Unterstützung von dessen Abfluss nach dem Schneiden zugeordnet ist.

13. Vorrichtung nach Anspruch 7 oder 8, dadurch gekennzeichnet, dass jeweils phasengleich angetriebene Messer (4,4') auf einer gemeinsamen Schubstange (9,9') starr montiert sind, welche auf motorisch antreibbaren Antriebsrädern (7) exzentrisch gelagert ist.

14. Vorrichtung nach Anspruch 13, dadurch gekennzeichnet, dass die Antriebsräder (7) über Zahnriemen (10) kraftschlüssig verbunden sind.

15. Vorrichtung nach Anspruch 7, dadurch gekennzeichnet, dass bei Ausbildung des statischen Organs (1) als Schneidmesser das bewegliche Organ (2) als Zubringer (23) für das Schnittgut ausgebildet ist.

16. Vorrichtung nach Anspruch 15, dadurch gekennzeichnet, dass die Zubringer (23) an ihrer dem statischen Organ (1) zugewandten Kante mit Einbuchtungen (24) zur Unterstützung der Mitnahme des Schnittguts versehen sind.

17. Vorrichtung nach Anspruch 16, dadurch gekennzeichnet, dass die Zubringer (23) als Doppelorgan ausgebildet sind, von denen der eine Teil unterhalb und der andere Teil oberhalb der Ebene des Schneidmessers angeordnet ist.

18. Vorrichtung nach einem der Ansprüche 1 bis 7 zur Anwendung für Heckenscheren, dadurch gekennzeichnet, dass das bewegliche Organ (2) durch ein längliches mit einem Wellschliff oder einer Verzahnung versehenes und relativ zur Anschlagkante (1) schwenkbares Messer (27) gebildet ist.

19. Vorrichtung nach Anspruch 18, dadurch gekennzeichnet, dass ein länglicher Schneidbalken (26) mit an beiden Längsseiten angeordneten Schneidzellen (3) vorgesehen, und dass jeweils zwei einander gegenüberliegenden Schneidzellen ein gemeinsames Messer (27) zugeordnet ist.

20. Vorrichtung nach Anspruch 19, dadurch gekennzeichnet, dass jede Messerhälfte mit einer Schneide versehen ist, welche für die eine Reihe von Schneidzellen (3) an der einen und für die andere Reihe von Schneidzellen an der anderen Längskante des Messers (27) angeordnet ist, und dass die Messer im Bereich ihres Mittelteils auf einem von einer motorisch antreibbaren Schubstange (9) getragenen Bolzen (28) schwenkbar gelagert sind.

21. Vorrichtung nach Anspruch 20, gekennzeichnet durch auf die Messer (27) im Bereich ihres Mittelteils einwirkende Federmittel (30), welche die Messer unter Vorspannung in ihrer unverschwenkten Normalposition halten.

## Claims

1. Apparatus for cutting down elongated standing crops, particularly stalk material, comprising a cutting compartment (3) to receive the crop, a static member (1,1') acting as opposing bearing for the crop and being provided with a stop edge for the latter, and a movable member (2,2') compacting the crop in the cutting compartment (3), the crop being cut off after the compaction by cooperation of the two members, characterised in that the movable member (2,2') is shaped in such a way that during the cutting it is driven substantially parallel to the said stop edge (1,1') and the movement during the cutting is substantially tangentially to the crop, and in that after the cutting down the cutting compartment (3) is released by the movable member (2,2') for the entry of the crop.

2. Apparatus according to Claim 1, characterised by a plurality of cutting compartments (3) which are disposed side by side, are open on one side, are each provided with a movable member (2, 2') and have an approximately U-shaped or V-shaped cross-section, and whose mouth-like opening is provided for the entry of the crop, while in said compartments at least one of the two legs is constructed as said static member (1, 1').

3. Apparatus according to Claim 2, characterised in that each movable member (2, 2') has an elongated shape, is directed parallel to the leg forming the static member (1, 1') and is driven circularly.

4. Apparatus according to Claim 3, characterised in that the movable member and/or the static member (2, 2' and 1, 1' respectively) is or are in the form of a cutting blade (4, 4').

5. Apparatus according to Claim 4, characterised in that each leg forming a static member (1, 1') is directed in or obliquely to the feed direction of the cutting apparatus.

6. Apparatus according to Claim 5, characterised in that, when the static members (1, 1') are disposed obliquely, their angle of inclination to the feed direction amounts to from 20° to 30°.

7. Apparatus according to Claim 5, characterised in that the depth of the cutting compartments (3) is at least equal to the diameter of the circle (K) of movement of the movable members (2, 2').

8. Apparatus according to Claim 7, characterised in that for each cutting compartment (3) two movable members (2, 2') in the form of blades (4, 4') are provided and are driven with a phase displacement of 180°.

9. Apparatus according to Claim 7, characterised in that the stop edge serving as static member (1, 1') of each cutting compartment (3) is equipped with means for securing the crop.

10. Apparatus according to Claim 9, characterised in that said means are formed by a toothing (19), a grooving, or indentations (22).

11. Apparatus according to Claim 7 or 9, characterised in that the stop edges are in each case disposed in pairs above and below the plane of the blades, and in that between the stop edges of each pair a gap (6) or a groove-like depression (18) is formed for the at least partial entry of the blade (4).

12. Apparatus according to Claim 11, characterised in that each blade (4) has associated with it a hook (31), which is disposed on the other side of one of the stop edges (1) and is drivable conjointly with the blade, for the purpose of compacting the crop and assisting its outward flow after the cutting.

13. Apparatus according to Claim 7 or 8, characterised in that blades (4, 4') driven in phase in each case are rigidly mounted on a common driving rod (9, 9'), which is eccentrically mounted on motor-driven driving wheels (7).

14. Apparatus according to Claim 13, characterised in that the driving wheels (7) are sliplessly connected by means of cogged belts (10).

15. Apparatus according to Claim 7, characterised in that when the static member (1) is in the form of a cutting blade the movable member (2) is in the form of a feeder (23) for the crop.

16. Apparatus according to Claim 15, characterised in that the feeders (23) are provided on their edge facing the static member (1) with indentations (24) assisting the carrying-along of the crop.

17. Apparatus according to Claim 16, characterised in that the feeders (23) are in the form of double members, one part of which is disposed below and the other part above the plane of the cutting blade.

18. Apparatus according to one of Claims 1 to 7, for application to hedge trimmers, characterised in that the movable member (2) is formed by an elongated blade (27) provided with a wavy cutting edge or with a toothing and pivotable relative to the stop edge (1).

19. Apparatus according to Claim 18, characterised in that an elongated cutting beam (26) is provided with cutting compartments (3) disposed one on each longitudinal side, and in that a common blade (27) is associated with each two cutting compartments lying opposite one another.

20. Apparatus according to Claim 19, characterised in that each half of the blade is provided with a cutting edge, which for the one row of cutting compartments (3) is disposed on the one longitudinal edge and for the other row of cutting compartments is disposed on the other longitudinal edge of the blade (27), and in that in the region of their middle part the blades are pivotally mounted on a pin (28) carried by a motor-driven driving rod (9).

21. Apparatus according to Claim 20, characterised by spring means (30) which act on the blades (27) in the region of their middle part and which hold the blades under initial stress in their unpivoted normal position.

## Revendications

1. Dispositif pour couper des matières de forme allongé, en particulier herbes et brins, comprenant une cellule de coupe (3) pour capter la matière à couper, un organe statique (1, 1') agissant comme butée pour la matière à couper et muni d'une arête d'arrêt pour cette matière, ainsi qu'un organe mobile (2, 2') comprimant la matière à couper dans la cellule de coupe (3), la coupe de cette matière se faisant après compression par action commune des deux organes, caractérisé en ce que l'organe mobile (2, 2') est conçu pour être actionné durant la coupe d'une façon essentiellement parallèle à l'arête d'arrêt (1, 1') mentionnée et le mouvement durant la coupe se fasse d'une façon essentiellement tangentielle à la matière à couper, et qu'après la coupe, la cellule de coupe (3) soit libérée par l'organe mobile (2, 2') pour permettre l'accès de la matière à couper.

2. Dispositif selon la revendication 1, caractérisé par une pluralité de cellules de coupe ayant une section approximative en U ou en V, disposées les unes à côté des autres, ouvertes d'un côté, équipées chacune d'un organe mobile (2, 2'), leur ouverture en forme de gueule étant prévue pour l'accès de la matière à couper et au moins l'une de leurs deux branches étant conçue pour avoir la fonction de l'organe statique (1, 1') mentionné.

3. Dispositif selon la revendication 2, caractérisé en se que chacun des organes mobiles (2, 2') présente une forme allongée, soit orienté d'une façon parallèle à la branche formant l'organe statique (1, 1') et soit actionné d'une façon circulaire.

4. Dispositif selon la revendication 3, caractérisé en ce que l'organe mobile (2, 2') et/ou statique (1, 1') soit exécuté sous forme d'une lame de couteau.

5. Dispositif selon la revendication 4, caractérisé en ce que chaque branche formant un organe statique (1, 1') soit orientée en direction de l'avancement du dispositif de coupe ou d'une façon oblique à cette direction.

6. Dispositif selon la revendication 5, caractérisé en ce que dans le cas d'une orientation oblique des organes statiques (1, 1'), leur angle par rapport à la direction de l'avancement soit de 20° à 30°.

7. Dispositif selon la revendication 5, caractérisé en ce que la profondeur des cellules de coupe (3) soit au moins égale au diamètre du cercle de mouvement (K) des organes mobiles (2, 2').

8. Dispositif selon la revendication 7, caractérisé en ce que chaque cellule de coupe (3) soit équipée de deux organes mobiles (2, 2') exécutés sous forme de lames de couteaux (4, 4') dont la commande se fait avec un déphasage mutuel de 180°.

9. Dispositif selon la revendication 7, caractérisé en ce que l'arête d'arrêt formant l'organe statique (1, 1') de chaque cellule de coupe (3) soit équipée d'éléments pour fixer la matière à couper.

10. Dispositif selon la revendication 9, caractérisé en ce que les éléments mentionnées soient exécutés sous forme d'une denture (19), d'une cannelure ou d'échancrures (22).

11. Dispositif selon la revendication 7 ou 9, caractérisé en ce que les arêtes d'arrêt soient prévues par paires audessus et endessous du plan du couteau, et qu'entre les arêtes d'arrêt de chaque paire il y ait un intervalle (6) ou une gorge (18) en forme de rainure permettant l'accès au moins partiel du couteau (4).

12. Dispositif selon la revendication 11, caractérisé en ce qu'à chaque couteau (4) soit associé un crochet (31) disposé de l'autre côté de l'une des arêtes d'arrêt (1), commandé simultanément avec le couteau, et servant à la compression de la matière à couper tout en assistant son écoulement après la coupe.

13. Dispositif selon la revendication 7 ou 8, caractérisé en ce que chacun des couteaux (4, 4') commandés en phase soit fixé de façon rigide sur une bielle commune (9, 9') montée de façon excentrique sur des roues de commande (7) pouvant s'entraîner par moteur.

14. Dispositif selon la revendication 13, caractérisé en ce que les roues de commande (7) soient reliées sans glissement par des courroies dentées (10).

15. Dispositif selon la revendication 7, caractérisé en ce que l'organe mobile (2) ait la forme d'un élément d'alimentation (23) pour la matière à couper lorsque l'organe statique (1) est conçu sous forme de couteau.

16. Dispositif selon la revendication 15, caractérisé en ce que les éléments d'alimentation (23) soient munis d'échancrures (24) sur leur arête face à l'organe statique (1), facilitant ainsi l'entraînement de la matière à couper.

17. Dispositif selon la revendication 16, caractérisé en ce que les éléments d'alimentation (23) soient exécutés sous forme d'un organe double dont la partie inférieure est disposée endessous et la partie supérieure audessus du plan de la lame du couteau.

18. Dispositif selon l'une des revendications 1 à 7 pour l'application sur sécateurs, caractérisé en ce que l'organe mobile est formé par un couteau (27) de forme allongée, muni d'un affûtage ondulé ou d'une dentelure et pivotant par rapport à l'arête d'arrêt (1).

19. Dispositif selon la revendication 18, caractérisé par une barre à couper (26) de forme allongée munie de cellules de coupe (3) sur ses deux côtés longitudinaux et par un couteau (27) commun pour chaque couple de cellules de coupe juxtaposées.

20. Dispositif selon la revendication 19, caractérisé en ce que chaque moitié de couteau soit équipée d'un tranchant disposé sur l'une des arêtes longitudinales de couteau (27) pour l'une des rangées de cellules de coupe (3) et sur l'autre des arêtes longitudinales pour l'autre rangée de cellules de coupe et que les couteaux soient fixés de façon pivotante es leur partie centrale sur un pivot monté sur une bielle (9) pouvant être commandée par moteur.

21. Dispositif selon la revendication 20, caractérisé par des éléments à ressorts (30) agissant sur les couteaux (27) en leur partie centrale et maintenant les couteaux sous prétension en leur position normale non pivotée.
